# EUROPÄISCHE PATENTSCHRIFT

(11) **EP 0 988 127 B1**
(45) Veröffentlichungstag und Bekanntmachung des Hinweises auf die Patenterteilung: **03.09.2003**
(21) Anmeldenummer: 98929434.3
(22) Anmeldetag: 09.06.1998
(51) Int. Cl.: B23K 1/00

(54) **VERFAHREN ZUM HERSTELLEN EINES METALLISCHEN WABENKÖRPERS MIT EINER GASDURCHLÄSSIGEN LOTFOLIE**
METHOD FOR PRODUCING A METALLIC HONEYCOMB ELEMENT BY MEANS OF A GAS PERMEABLE SOLDERING FOIL
PROCEDE DE FABRICATION D'UN CORPS METALLIQUE EN NID-D'ABEILLES AU MOYEN D'UNE FEUILLE DE BRASURE PERMEABLE AU GAZ

(30) Priorität: 13.06.1997 DE 19725177
(43) Veröffentlichungstag der Anmeldung: 29.03.2000
(73) Patentinhaber: Emitec Gesellschaft für Emissionstechnologie mbH, 53797 Lohmar (DE)
(72) Erfinder: BRÜCK, Rolf, D-51429 Bergisch Gladbach (DE)
(74) Vertreter: Kahlhöfer, Hermann, Dipl.-Phys.
(86) Internationale Anmeldenummer: EP9803455
(87) Internationale Veröffentlichungsnummer: WO98056531

(56) Entgegenhaltungen:
- EP-A- 0 552 400
- EP-A- 0 653 264
- US-A- 4 397 715

## Beschreibung

Die vorliegende Erfindung betrifft ein Verfahren sowie eine Lotfolie zum Herstellen eines metallischen Wabenkörpers, der aus zumindest teilweise strukturierten Blechlagen gewickelt, geschichtet oder geschlungen ist.

Metallische Wabenkörper werden beispielsweise als Trägerkörper für katalytisch aktives Material zum Einsatz in der Abgasreinigung bei Kraftfahrzeugen verwendet. Auch andere Anwendungen bei vergleichbar feinen Blechstrukturen, wie z.B. in Wärmetauschern, sind möglich.

Zur metallischen Verbindung der Blechlagen wird der Wabenkörper einem Lötvorgang unterzogen. Durch die DE 29 24 592 A1 sind unterschiedliche Möglichkeiten Lotmaterial in einen metallischen Wabenkörper einzubringen, bekannt. Die Art und Weise der Einbringung des Lotmaterials in einen Wabenkörper ist abhängig von dem Lotmaterial. Handelt es sich bei dem Material um pulverförmiges Lot, so kann dieses mittels eines Lotpulverwirbelbetts in den Wabenkörper eingebracht werden. Um sicherzustellen, daß das Lotpulver in dem Wabenkörper bis zur Durchführung eines Lötprozesses verbleibt ist es notwendig, den Wabenkörper wenigstens teilweise mit einem Haftkleber für das Lotpulver zu beaufschlagen. Ein solches Belotungsverfahren ist auch durch die WO 94/06594 bekannt.

Durch die DE 29 24 592 A1 ist auch bekannt, daß das Lotmaterial in Form einer Lotfolie, insbesondere Lotbändern, in den Wabenkörper eingebracht wird. Ein Lotband wird zwischen die strukturierten Blechlagen während eines Wickel- oder Schichtvorgangs der Blechlagen eingebracht. Bei der Verwendung eines Lotbandes kann auf einen Haftkleber, wie er bei einem Lotpulver benötigt wird, verzichtet werden. Durch die Einbringung eines Lotbandes zwischen den Blechlagen kommt es jedoch während eines Lötprozesses zu Vorspannungsverlusten des Wabenkörpers, so daß zwischen den Blechlagen teilweise keine Lötverbindungen entstehen.

Eine weitere Möglichkeit der Einbringung eines Lotmaterials in einen Wabenkörper besteht nach der DE 29 24 592 A1 darin, daß die wenigstens teilweise strukturierten Blechlagen zu einem zylindrischen Wabenkörper gewickelt, geschichtet oder geschlungen werden und anschließend in mindestens eine Stirnfläche des Wabenkörpers eine Lotfolie bestimmter Dicke eingepreßt wird. Hierbei wird die Lotfolie soweit in den Wabenkörper eingepreßt, daß das Lot während des Lötprozesses in den einzelnen Waben verbleiben soll.

Problematisch bei einer solchen Verfahrensführung ist, daß die Lotfolie durch die Kanten der Blechlagen nicht durchtrennt werden darf, da ansonsten bei einer thermischen Expansion des Wabenkörpers in radialer Richtung die Lotteile aus den einzelnen Waben des Wabenkörpers herausfallen würden. Ein Verlöten des Wabenkörpers im Bereich der beiden Stirnflächen des Wabenkörpers ist auch problematisch, da während der Erwärmung des Wabenkörpers mit dem Lotmaterial auf die Lottemperatur die sich in dem Wabenkörper befindende Luft expandiert, und es hierdurch zu einer Druckerhöhung innerhalb des Wabenkörpers kommt, durch die das Lotmaterial aus den einzelnen Waben herausgedrückt werden kann.

Hiervon ausgehend liegt der vorliegenden Erfindung die Zielsetzung zugrunde, ein Verfahren sowie eine Lotfolie zum Herstellen eines metallischen Wabenkörpers sowie einen Wabenkörper anzugeben, wodurch die Herstellung des Wabenkörpers vereinfacht wird. Ferner soll eine gute Lötverbindung zwischen den Blechlagen erreicht werden.

Diese Zielsetzung wird durch ein Verfahren zum Herstellen eines metallischen Wabenkörpers, an der aus zumindest teilweise strukturierten Blechlagen gewickelt, geschichtet oder geschlungen ist, dadurch erreicht, daß wenigstens eine mindestens teilweise gasdurchlässige Lotfolie an mindestens einer Stirnfläche des Wabenkörpers angeordnet und mindestens mit wenigstens einem Teilbereich der Blechlagen in Kontakt gebracht und der Wabenkörper zur metallischen Verbindung wenigstens der Blechlagen einem Lötvorgang unterzogen wird. Dadurch, daß die Lotfolie gasdurchlässig ist, hat das sich in dem Wabenkörper befindende Gas keinen oder nur einen sehr geringen Einfluß auf das Verhalten der Lotfolie während eines Lötvorgangs. Hierdurch wird auch erreicht, daß die Lotfolie aufgrund einer Kapilarwirkung in den Wabenkörper gesaugt wird. Es ist daher nicht zwingend notwendig, die Lotfolie soweit in den Wabenkörper hineinzudrücken, wozu besondere Werkzeug notwendig wären, wie dies aus dem Stand der Technik erforderlich ist.

Durch das erfindungsgemäße Verfahren ist auch eine selektive Ausbildung metallischer Verbindungen wenigstens der Blechlagen des Wabenkörpers möglich. Durch entsprechende Ausgestaltung der Folie, so daß diese eine Außenkontur aufweist, die nicht zwingend der Umfangslinie der Stirnfläche des Wabenkörpers entspricht, können die Blechlagen des Wabenkörpers in einzelnen Bereichen miteinander verbunden werden. Durch diese Verfahrensführung ist es auch nicht notwendig, wie dies nach dem Stand der Technik bei einer Belotung mit Pulver bekannt ist, Masken zu verwenden, durch die eine Stirnfläche eines Wabenkörpers nur selektiv belotet wird. Die selektive bzw. bereichsweise Ausbildung metallischer Verbindungen der Blechlagen kann auch dadurch erfolgen, daß mehrere Lotfolien an der Stirnfläche angeordnet werden. Durch das erfindungsgemäße Verfahren wird auch eine große Variationszahl der möglichen Ausgestaltungen metallischer Verbindungen wenigstens der Blechlagen des Wabenkörpers ermöglicht. So kann nach einer vorteilhaften Ausgestaltung des Verfahrens wenigstens ein Teilbereich der Blechlagen in einer jeden Stirnfläche des Wabenkörpers mit wenigstens einer Lotfolie in Kontakt gebracht werden.

Ein besonders mechanisch stabiler Wabenkörper wird dadurch erreicht, daß alle Blechlagen an wenigstens einer Stirnfläche mit wenigstens einer Lotfolie in Kontakt gebracht werden und einem Lötvorgang unterzogen werden.

Bevorzugt ist ein Verfahren, bei dem mindestens eine Stirnfläche des aus den Blechlagen hergestellten Wabenkörpers wenigstens teilweise mit einer gasdurchlässigen, porösen Lotfolie in Kontakt gebracht wird. Insbesondere handelt es sich bei der Lotfolie um eine Lotschaumfolie, die einen offenporigen, zelligen Aufbau hat. Eine solche Lotschaumfolie haftet besonders gut an der Stirnfläche eines Wabenkörpers. Ein weiterer Vorteil dieser Verfahrensführung ist auch ein relativ guter Gasaustausch zwischen der Umgebungsatmosphäre und dem Wabenkörper durch die Lotschaumfolie.

Um zu erreichen, daß die einzelnen Blechlagen eines Wabenkörpers miteinander metallisch verbunden werden, wird nach einem weiteren vorteilhaften Gedanken vorgeschlagen, daß die gesamte Stirnfläche des Wabenkörpers mit einer Lotfolie in Kontakt gebracht wird. Eine besonders gute Stabilität eines metallischen Wabenkörpers wird dadurch erreicht, daß eine jede Stirnfläche des Wabenkörpers mit einer Lotfolie in Kontakt gebracht und einem Lötvorgang unterzogen wird. Dadurch, daß die Lotfolie gasdurchlässig ausgebildet ist, können die Blechlagen an jeder Stirnfläche des Wabenkörpers gleichzeitig, d.h. während eines einzigen Lötvorgangs, verlötet werden.

Zur verbesserten Haftung der Lotfolie an einer Stirnfläche des Wabenkörpers wird vorgeschlagen, daß die Lotfolie teilweise in den Wabenkörper eingepreßt wird. Sie wird jedoch so eingepreßt, daß die Gasdurchlässigkeit der Lotfolie im wesentlichen erhalten bleibt.

Zur Vereinfachung der Herstellung des metallischen Wabenkörpers wird vorgeschlagen, daß zunächst die Lotfolie auf mindestens eine Stirnfläche des Wabenkörpers aufgebracht und danach der Wabenkörper mit der Lotfolie in ein Mantelrohr eingebracht werden. Alternativ wird vorgeschlagen, daß zunächst der Wabenkörper in ein Mantelrohr eingebracht und danach die Lotfolie auf mindestens eine Stirnfläche des Wabenkörpers aufgebracht wird.

Nach einer weiteren vorteilhaften Ausgestaltung des Verfahrens wird der Wabenkörper mit der Lotfolie einem Vakuumlötvorgang unterzogen. Dadurch, daß die Lotfolie gasdurchlässig ist, und der Wabenkörper einem Vakuumlötvorgang unterzogen wird, wird eine besonders gute metallische Verbindung der Blechlagen erreicht.

Bevorzugt ist eine Ausgestaltung des Verfahrens, bei dem ein Mantelrohr mit dem Wabenkörper und die Blechlagen des Wabenkörpers untereinander in einem einzigen Lötvorgang miteinander verbunden werden. Hierzu wird vorgeschlagen, daß der Wabenkörper in einem Mantelrohr angeordnet und wenigstens eine Lotfolie wenigstens mit einem Abschnitt einer Innenoberfläche des Mantels mit wenigstens einem Teilbereich der Blechlagen in Kontakt gebracht wird. Hierdurch wird auch eine relativ starre Verbindung zwischen dem Mantelrohr und dem Wabenkörper erreicht.

Soll die Elastizität des Wabenkörpers wenigstens in einem dem Mantelrohr benachbarten Randbereich erhalten bleiben, wodurch unterschiedliche thermische Ausdehnungen in radialer Richtung des Wabenkörpers und des Mantelrohres kompensiert werden können, wird vorgeschlagen, daß die wenigstens eine Lotfolie mit Abstand zu einer Innenoberfläche des Mantelrohres an der Stirnfläche des Wabenkörpers angeordnet wird.

Zu einer weiteren Verbesserung der metallischen Verbindung der Blechlagen wird vorgeschlagen, daß der Wabenkörper mit der Lotfolie zunächst unter Vakuum in einer Reinigungskammer gereinigt und danach zum Durchführen des Lötprozesses in eine Prozeßkammer überführt wird. Aufgrund des Umstandes, daß die Lotfolie an wenigstens einer Stirnfläche des Wabenkörpers anhaftet, ist es nicht notwendig Haftkleber oder dergleichen zu verwenden, wie dies aus Verfahren bekannt ist, bei denen pulverförmiges Lot eingesetzt wird. Bei einer thermischen Reinigung könnte bei solchen Verfahren der Kleber inaktiv werden, so daß das Lot bei weiteren Fertigungsschritten herausfiel. Eine Verunreinigung der Reinigungskammer durch Dämpfe des Haftklebers tritt nicht ein. Wird in der Reinigungskammer nach dem Erzeugen eines Vakuums beispielsweise eine Schutzgasatmosphäre eingebracht, so kann bei dem erfindungsgemäßen Verfahren das Gas, welches zur Ausbildung der Schutzgasatmosphäre dient, mehrfach verwendet werden, da eine Verunreinigung des Gases aufgrund von Ausdünstungen nicht oder nur in einem sehr geringen Maße eintritt.

Gemäß einem anderen erfinderischen Gedanken wird eine Lotfolie zum Herstellen eines metallischen Wabenkörpers, der aus zumindest teilweise strukturierten Blechlagen gewickelt, geschichtet oder geschlungen ist, vorgeschlagen, wobei die Lotfolie gasdurchlässig ist. Durch den Einsatz einer solchen Lotfolie zum Herstellen eines metallischen Wabenkörpers kann auf die relativ aufwendige Aufbringung von Lotpulver an die Oberfläche der Blechlagen verzichtet werden. Bestand bei Wabenkörpern, die mit Lotpulver beschichtet worden sind, stets die Gefahr, daß sich das Lotpulver während einer Überführung eines Wabenkörpers in eine Lötstation ablöst, so ist eine solche Gefahr bei der Verwendung einer Lotfolie, die ein makroskopisches Gebilde ist, nicht mehr. Dies vereinfacht auch die Herstellung von Wabenkörpern. Vorzugsweise ist die Lotfolie porös, insbesondere offenporig, wodurch die Gasdurchlässigkeit der Lotfolie verbessert wird.

Gemäß einer weiteren vorteilhaften Ausgestaltung wird vorgeschlagen, daß die Lotfolie in Form einer Lotschaumfolie ausgebildet ist.

Zur Verbesserung des Lötprozesses und somit auch einer Lötverbindung zwischen den zu verbindenden Teilen, insbesondere Blechlagen, wird vorgeschlagen, daß die Lotfolie wenigstens ein Flußmittel enthält.

Vorzugsweise ist die Lotfolie ein auf Nickel basierendes Material. Die Lotfolie kann einen geringen Anteil an Kohlenstoff enthalten. Sie kann auch im wesentlichen kohlenstofffrei sein. Zur Herabsetzung der Löttemperatur und zur Verbesserung der Lötverbindung wird vorgeschlagen, daß die Lotfolie Bor und/oder Silizium enthält. Der Borgehalt der Lotfolie kann bis zu 8,5 Gew.-% betragen. Das Material der Lotfolie kann auch im wesentlichen chromfrei sein.

Weitere Vorteile und Einzelheiten der Erfindung werden anhand eines in der Zeichnung dargestellten Ausführungsbeispiels erläutert. Es zeigen:
- Fig. 1: einen metallischen Wabenkörper im Querschnitt,
- Fig. 2: eine Vorderansicht des Wabenkörpers nach Fig. 1,
- Fig. 3: schematisch eine Lotfolie im Querschnitt,
- Fig. 4: ein erstes Ausführungsbeispiel einer Lotfolie in einer Draufsicht,
- Fig. 5: ein zweites Ausführungsbeispiel einer Lotfolie in einer Draufsicht und
- Fig. 6: ein drittes Ausführungsbeispiel einer Lotfolie in einer Draufsicht.

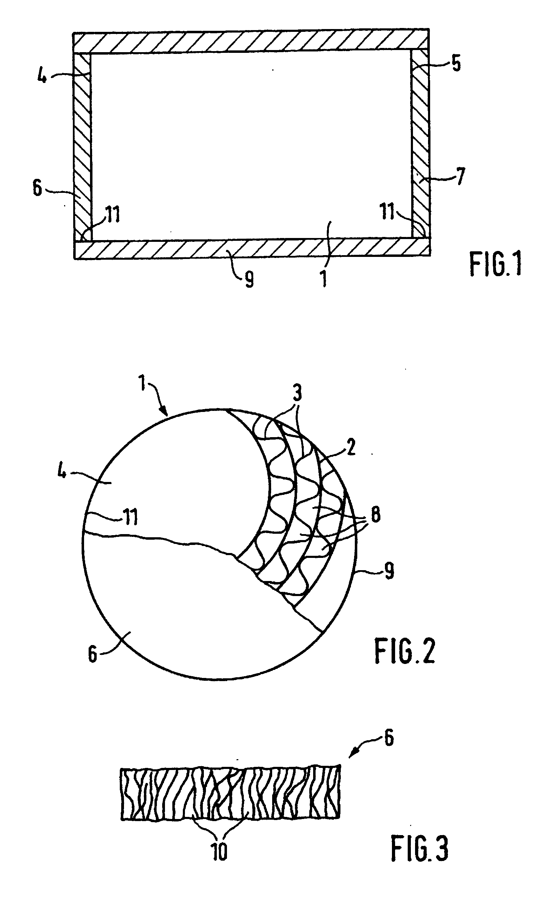

In der Fig. 1 ist ein Wabenkörper im Längsschnitt dargestellt. Der Wabenkörper 1 ist in einem Mantelrohr 9 angeordnet. Er weist Stirnflächen 4, 5 auf. An jeder Stirnfläche 4, 5 ist eine Lotfolie 6 bzw. 7 angeordnet. Die Lotfolie 6, 7 ist gegen die Stirnfläche 4 bzw. 5 angedrückt, so daß diese an dem Wabenkörper 1 anhaftet. Die Lotfolie 6, 7 überdeckt im wesentlichen die gesamte Stirnfläche 4, 5. Die Lotfolie 6, 7 liegt an einem Abschnitt einer Innenoberfläche 11 des Mantelrohres 9 an.

Der Wabenkörper 1 ist aus glatten Blechlagen 2 und strukturierten Blechlagen 3 gebildet. Die Blechlagen 2, 3 begrenzen Kanäle 8, die sich im wesentlichen in axialer Richtung des Wabenkörpers 4 erstrecken. Solche Wabenkörper 1 werden als Katalysatorträgerkörper im Abgassystem eines Kraftfahrzeugs verwendet. Schematisch ist in der Fig. 2 dargestellt, daß die Lotfolie 6 an der Stirnfläche 4 angeordnet ist. Die Außenkontur der Lotfolie 6 bzw. 7 entspricht im wesentlichen der Innenkontur des Mantelrohres 9, so daß die gesamte Stirnfläche 4, 5 mit der Lotfolie bedeckt ist.

Ein so vorbereiteter Wabenkörper wird einem Lötprozeß unterzogen. Dadurch, daß die Lotfolie an der Stirnfläche 4 bzw. 5 anhaftet kann der Wabenkörper stehend gelötet werden. In dieser Anordnung verläuft die Längsachse des Wabenkörpers im wesentlichen vertikal. Der Lötvorgang kann in einem Vakuumlötofen durchgeführt werden, da die Lotfolie gasdurchlässig ist. Aufgrund dieser Ausgestaltung der Lotfolie können auch die einzelnen Kanäle 8 des Wabenkörpers evakuiert werden. Zweckmäßigerweise wird ein Wabenkörper vor einem Vakuumlötprozeß einem Reinigungsschritt in einer Reinigungskammer unterzogen. Der Reinigungsschritt kann durch Evakuierung einer Reinigungskammer erfolgen. Danach kann beispielsweise ein Gas, insbesondere eine Inertgas, vorzugsweise erwärmtes Inertgas, in die Reinigungskammer eingeleitet werden. Hierdurch werden mögliche Rückstände, z.B. Walzöl, aus dem Herstellungsprozeß des Wabenkörpers entfernt. Danach kann der Wabenkörper gegebenenfalls in eine Prozeßkammer einem Lötprozeß unterzogen werden.

Eine Lotfolie 6, 7 ist vorzugsweise in Form einer Lotschaumfolie ausgebildet, wie sie schematisch in der Fig. 3 dargestellt ist. Die Lotschaumfolie hat Durchgangsporen 10. Durch diese Kanäle ist die Lotfolie gasdurchlässig. Die Lotfolie enthält vorzugsweise ein Flußmittel. Sie ist ein auf Nickel basierendes Material.

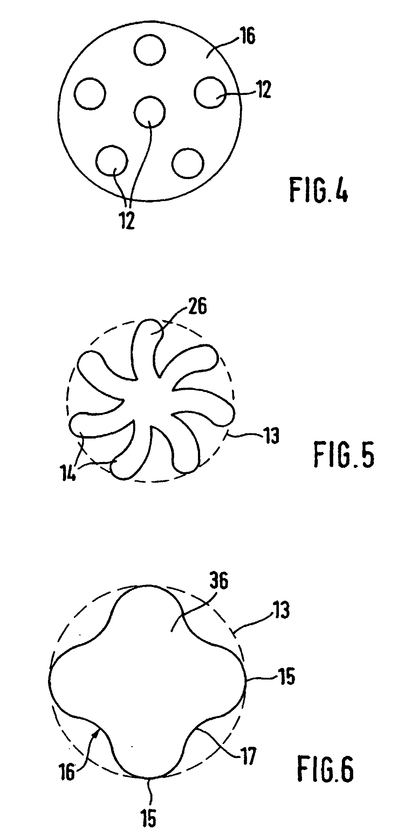

Fig. 4 zeigt ein Ausführungsbeispiel einer Lotfolie 16. Die Lotfolie 16 weist Durchgangsöffnungen 12 auf, durch die Teilbereiche der Blechlagen nicht miteinander verbunden werden. Die Form und die Anzahl der Durchgangsöffnungen 12 kann an das gewünschte Lötergebnis angepaßt werden.

Fig. 5 zeigt ein zweites Ausführungsbeispiel einer Lotfolie 26 in einer Draufsicht. Die Lotfolie 26 weist von einem Zentrum ausgehende fingerartige Vorsprünge 14 auf. Die Endbereiche der Vorsprünge 14 liegen auf einem gemeinsamen gedachten Umfang 13. Der Umfang 13 kann mit dem Außenumfang einer Stirnfläche des Wabenkörpers übereinstimmen. Durch die Ausgestaltung der Lotfolie 26 wird eine strahlenförmig von einem Zentrum des Wabenkörpers ausgehende Lotverbindung der Blechlagen erreicht.

Ein weiteres Ausführungsbeispiel einer Lotfolie 36 ist in der Fig. 6 dargestellt. Die Lotfolie 36 weist an ihrem Außenumfang Abschnitte 15 auf, die auf einem gemeinsamen gedachten Umfang 13 liegen. Zwischen zwei benachbarten Abschnitten 15 liegt ein Abschnitt 17, der vom Zentrum des Umfangs 13 bzw. der Lotfolie 36 betrachtet mit Abstand zum Umfang 13 ausgebildet ist. Stimmt der Außenumfang 13 mit dem Innenumfang einer Innenoberfläche des Mantelrohres überein, so werden Blechlagen in den Abschnitten 15 mit dem Mantelrohr verbunden. In den zwischen den Abschnitten 15 liegenden Abschnitten 17 erfolgt keine Verbindung der Blechlagen eines Wabenkörpers mit einem Mantelrohr.

### Bezugszeichenliste

- 1: Wabenkörper
- 2, 3: Blechlagen
- 4, 5: Stirnfläche
- 6, 7: Lotfolie
- 8: Kanal
- 9: Mantelrohr
- 10: Poren
- 11: Innenoberfläche
- 12: Öffnungen
- 13: Umfang
- 14: Vorsprünge
- 15, 17: Abschnitt
- 16, 26, 36: Lotfolie

## Patentansprüche

1. Verfahren zum Herstellen eines metallischen Wabenkörpers (1), der aus zumindest teilweise strukturierten Blechlagen (2, 3) gewickelt, geschichtet oder geschlungen ist, bei dem wenigstens eine mindestens teilweise gasdurchlässige Lotfolie (6, 7, 16, 26, 36) an mindestens einer Stirnfläche (4, 5) des Wabenkörpers (1) angordnet und mindestens mit wenigstens einem Teilbereich der Blechlagen (2, 3) in Kontakt gebracht und der Wabenkörper (1) zur metallischen Verbindung wenigstens der Blechlagen (2, 3) einem Lötvorgang unterzogen wird.

2. Verfahren nach Anspruch 1, bei dem wenigstens eine gasdurchlässige, poröse Lotfolie (6, 7, 16, 26, 36) mindestens mit wenigstens einem Teilbereich der Blechlagen (2, 3) in Kontakt gebracht wird.

3. Verfahren nach Anspruch 1 oder 2, bei dem wenigstens eine Lotschaumfolie (6, 7, 16, 26, 36) mindestens mit wenigstens einem Teilbereich der Blechlagen (2, 3) in Kontakt gebracht wird.

4. Verfahren nach Anspruch 1, 2 oder 3, bei dem wenigstens ein Teilbereich der Blechlagen (2, 3) in einer jeden Stirnfläche (4, 5) des Wabenkörpers (1) mit wenigstens einer Lotfolie (6, 7, 16, 26, 36) in Kontakt gebracht wird.

5. Verfahren nach einem der Ansprüche 1 bis 4, bei dem alle Blechlagen (2, 3) in wenigstens einer Stimfäche (4, 5) mit wenigstens einer Lotfolie (6, 7, 16, 26, 36) in Kontakt gebracht werden.

6. Verfahren nach einem der Ansprüche 1 bis 5, bei dem wenigstens ein Teilbereich der Blechlagen (2, 3) in wenigstens einer Stirnfläche (4, 5) des Wabenkörpers (1) mit jeweils einer Lotfolie (6, 7, 16, 26, 36) in Kontakt gebracht wird.

7. Verfahren nach einem der Ansprüche 1 bis 6, bei dem eine jede Lottfolie (6, 7, 16, 26, 36) wenigstens teilweise in den Wabenkörper (1) eingepreßt wird.

8. Verfahren nach einem der Ansprüche 1 bis 7, bei dem zunächst wenigstens eine Lotfolie (6, 7, 16, 26, 36) auf mindestens eine Stirnfläche (4, 5) des Wabenkörpers (1) aufgebracht und danach der Wabenkörper (1) mit Lotfolie(n) (6, 7, 16, 26, 36) in ein Mantelrohr (9) eingebracht werden.

9. Verfahren nach einem der Ansprüche 1 bis 7, bei dem zunächst der Wabenkörper (1) in ein Mantelrohr (9) eingebracht und danach wenigstens eine Lotfolie (6, 7, 16, 26, 36) auf mindestens eine Stirnfläche (4, 5) des Wabenkörpers (1) aufgebracht wird.

10. Verfahren nach einem der Ansprüche 1 bis 9, bei dem der Wabenkörper (1) in einem Mantelrohr (9) angeordnet und wenigstens eine Lotfolie (6, 7, 16, 26, 36) wenigstens mit einem Abschnitt einer Innenoberfläche (11) des Mantelrohres (9) und mit wenigstens einem Teilbereich der Blechlagen (2, 3) in Kontakt gebracht wird.

11. Verfahren nach einem der Ansprüche 1 bis 9, bei dem der Wabenkörper (1) in einem Mantelrohr (9) angeordnet und wenigstens eine Lotfolie (6, 7, 16, 26, 36) mit wenigstens einem Abschnitt (17) beabstandet zu einer Innenoberfläche (11) des Mantelrohres (9) ist, und mit wenigstens einem Teilbereich der Blechlagen (2, 3) in Kontakt gebracht wird.

12. Verfahren nach einem der Ansprüche 1 bis 11, bei dem der Wabenkörper (1) mit der Lotfolie (6, 7, 16, 26, 36) einem Vakuumlötvorgang unterzogen wird.

13. Verfahren nach einem der Ansprüche 1 bis 12, bei dem der Wabenkörper (1) mit Lotfolie(n) (6, 7, 16, 26, 36) zunächst unter Vakuum in einer Reinigungskammer thermisch gereinigt und danach zum Durchführen des Lötprozesses in eine Prozeßkammer überführt wird.

14. Lotfolie zum Herstellen eines metallischen Wabenkörpers (1), der aus zumindest teilweise strukturierten Blechlagen (2, 3) gewickelt, geschichtet oder geschlungen ist, insbesondere nach einem der Ansprüche 1 bis 13, **dadurch gekennzeichnet, daß** die Lotfolie (6, 7, 16, 26, 36) gasdurchlässig ist.

15. Lotfolie nach Anspruch 14, **dadurch gekennzeichnet, daß** die Lotfolie (6, 7, 16, 26, 36) porös ist.

16. Lotfolie nach Anspruch 14 oder 15, **dadurch gekennzeichnet, daß** die Lotfolie (6, 7, 16, 26, 36) eine Lotschaumfolie ist.

17. Lotfolie nach Anspruch 14, 15 oder 16, **dadurch gekennzeichnet, daß** die Lotfolie (6, 7, 16, 26, 36) wenigstens ein Flußmittel enthält.

18. Lotfolie nach einem der Ansprüche 14 bis 17, **dadurch gekennzeichnet, daß** die Lotfolie (6, 7, 16, 26, 36) ein auf Nickel basierendes Material ist.

19. Lotfolie nach einem der Ansprüche 14 bis 18, **dadurch gekennzeichnet, daß** die Lotfolie (6, 7, 16, 26, 36) Bor und/oder Silizium enthält.

## Claims

1. A process for the manufacture of a metallic honeycomb body (1) which is wound, stacked or twisted from at least partially structured sheet layers (2, 3), in which at least one at least partially gas-permeable brazing foil (6, 7, 16, 26, 36) is arranged at at least one end face (4, 5) of the honeycomb body (1) and brought into contact at least with at least one region of the sheet layers (2, 3) and the honeycomb body (1) is subjected to a brazing procedure for making a metallic joint of at least the sheet layers (2, 3).

2. A process according to claim 1, wherein at least one gas-permeable, porous brazing foil (6, 7, 16, 26, 36) is brought into contact at least with at least one region of the sheet layers (2, 3).

3. A process according to claim 1 or 2, wherein at least one brazing foam foil (6, 7, 16, 26, 36) is brought into contact at least with at least one region of the sheet layers (2, 3).

4. A process according to claim 1, 2, or 3, wherein at least one region of the sheet layers (2, 3) in each end face (4, 5) of the honeycomb body (1) is brought into contact with at least one brazing foil (6, 7, 16, 26, 36).

5. A process according to one of claims 1 to 4, wherein all sheet layers (2, 3) in at least one end face (4, 5) are brought into contact with at least one brazing foil (6, 7, 16, 26, 36).

6. A process according to one of claims 1 to 5, wherein at least one region of the sheet layers (2, 3) in at least one end face (4, 5) of the honeycomb body (1) is brought into contact with a respective brazing foil (6, 7, 16, 26, 36).

7. A process according to one of claims 1 to 6, wherein each brazing foil (6, 7, 16, 26, 36) is at least partially pressed into the honeycomb body (1).

8. A process according to one of claims 1 to 7, wherein firstly at least one brazing foil (6, 7, 16, 26, 36) is applied to at least one end face (4, 5) of the honeycomb body (1) and thereafter the honeycomb body (1) with brazing foil or foils (6, 7, 16, 26, 36) is introduced into a tubular casing (9).

9. A process according to one of claims 1 to 7, wherein firstly the honeycomb body (1) is introduced into a tubular casing (9) and thereafter at least one brazing foil (6, 7, 16, 26, 36) is applied to at least one end face (4, 5) of the honeycomb body (1).

10. A process according to one of claims 1 to 9, wherein the honeycomb body (1) is arranged in a tubular casing (9) and at least one brazing foil (6, 7, 16, 26, 36) is brought into contact at least with a portion of an internal surface (11) of the tubular casing (9) and with at least one region of the sheet layers (2, 3).

11. A process according to one of claims 1 to 9, wherein the honeycomb body (1) is arranged in a tubular casing (9) and at least one brazing foil (6, 7, 16, 26, 36) is spaced with at least one portion (17) relative to an internal surface (11) of the tubular casing (9) and is brought into contact with at least one region of the sheet layers (2, 3).

12. A process according to one of claims 1 to 11, wherein the honeycomb body (1) with the brazing foil (6, 7, 16, 26, 36) is subjected to a vacuum brazing procedure.

13. A process according to one of claims 1 to 12, wherein the honeycomb body (1) with brazing foil or foils (6, 7, 16, 26, 36) is firstly thermally cleaned under vacuum in a cleaning chamber and thereafter transferred into a process chamber for carrying out the brazing procedure.

14. A brazing foil for the manufacture of a metallic honeycomb body (1) which is wound, stacked or twisted from at least partially structured sheet layers (2, 3), in particular according to one of claims 1 to 13, **characterized in that** the brazing foil (6, 7, 16, 26, 36) is gas-permeable.

15. A brazing foil according to claim 14, **characterized in that** the brazing foil (6, 7, 16, 26, 36) is porous.

16. A brazing foil according to claim 14 or 15, **characterized in that** the brazing foil (6, 7, 16, 26, 36) is a brazing foam foil.

17. A brazing foil according to claim 14, 15, or 16, **characterized in that** the brazing foil (6, 7, 16, 26, 36) contains at least one fluxing agent.

18. A brazing foil according to one of claims 14 to 17, **characterized in that** the brazing foil (6, 7, 16, 26, 36) is a nickel-based material.

19. A brazing foil according to one of claims 14 to 18, **characterized in that** the brazing foil (6, 7, 16, 26, 36) contains boron and/or silicon.

## Revendications

1. Procédé destiné à la fabrication d'un corps en nids d'abeilles métallique (1) qui est enroulé, empilé ou entre-enroulé à partir de couches de tôles au moins partiellement structurées (2, 3), dans le cas duquel au moins une feuille de brasure (6, 7, 16, 26, 36) au moins partiellement perméable au gaz est agencée sur au moins une face frontale (4, 5) du corps en nids d'abeilles (1) et est au moins mise en contact avec au moins une zone partielle des couches de tôles (2, 3) et le corps en nids d'abeilles (1) est soumis à un procédé de brasage pour la liaison métallique d'au moins les couches de tôles (2, 3).

2. Procédé selon la revendication 1, dans le cas duquel au moins une feuille de brasure perméable au gaz et poreuse (6, 7, 16, 26, 36) est au moins mise en contact avec au moins une zone partielle des couches de tôles (2, 3).

3. Procédé selon la revendication 1 ou 2, dans le cas duquel au moins une feuille de mousse de brasure (6, 7, 16, 26, 36) est au moins mise en contact avec au moins une zone partielle des couches de tôles (2, 3).

4. Procédé selon la revendication 1, 2 ou 3, dans le cas duquel au moins une zone partielle des couches de tôles (2, 3) dans chaque face frontale (4, 5) du corps en nids d'abeilles (1) est mise en contact avec au moins une feuille de brasure (6, 7, 16, 26, 36).

5. Procédé selon l'une des revendications 1 à 4, dans le cas duquel toutes les couches de tôles (2, 3) dans au moins une face frontale (4, 5) sont mises en contact avec au moins une feuille de brasure (6, 7, 16, 26, 36).

6. Procédé selon l'une des revendications 1 à 5, dans le cas duquel au moins une zone partielle des couches de tôles (2, 3) dans au moins une face frontale (4, 5) du corps en nids d'abeilles (1) est mise en contact avec une feuille de brasure (6, 7, 16, 26, 36) respective.

7. Procédé selon l'une des revendications 1 à 6, dans le cas duquel chaque feuille de brasure (6, 7, 16, 26, 36) est pressée au moins partiellement dans le corps en nids d'abeilles (1).

8. Procédé selon l'une des revendications 1 à 7, dans le cas duquel d'abord au moins une feuille de brasure (6, 7, 16, 26, 36) est appliquée sur au moins une face frontale (4, 5) du corps en nids d'abeilles (1) et le corps en nids d'abeilles (1) avec de la (des) feuille(s) de brasure (6, 7, 16, 26, 36) est ensuite introduit dans un tube d'enveloppe (9).

9. Procédé selon l'une des revendications 1 à 7, dans le cas duquel le corps en nids d'abeilles (1) est d'abord introduit dans un tube d'enveloppe (9) et ensuite au moins une feuille de brasure (6, 7, 16, 26, 36) est appliquée sur au moins une face frontale (4, 5) du corps en nids d'abeilles (1).

10. Procédé selon l'une des revendications 1 à 9, dans le cas duquel le corps en nids d'abeilles (1) est agencé dans un tube d'enveloppe (9) et au moins une feuille de brasure (6, 7, 16, 26, 36) est au moins mise en contact avec une section d'une surface intérieure (11) du tube d'enveloppe (9) et avec au moins une zone partielle des couches de tôles (2, 3).

11. Procédé selon l'une des revendications 1 à 9, dans le cas duquel le corps en nids d'abeilles (1) est agencé dans un tube d'enveloppe (9) et au moins une feuille de brasure (6, 7, 16, 26, 36) est à distance d'une surface intérieure (11) du tube d'enveloppe (9) avec au moins une section (17) et est mise en contact avec au moins une zone partielle des couches de tôles (2, 3).

12. Procédé selon l'une des revendications 1 à 11, dans le cas duquel le corps en nids d'abeilles (1) avec la feuille de brasure (6, 7, 16, 26, 36) est soumis à un processus de brasage sous vide.

13. Procédé selon l'une des revendications 1 à 12, dans le cas duquel le corps en nids d'abeilles (1) avec de la (des) feuille(s) de brasure (6, 7, 16, 26, 36) est d'abord nettoyé thermiquement sous vide dans une chambre de nettoyage et est ensuite transféré dans une chambre de traitement pour effectuer le processus de brasage.

14. Feuille de brasure pour fabriquer un corps en nids d'abeilles métallique (1), qui est enroulé, empilé ou entre-enroulé à partir de couches de tôles au moins partiellement structurées (2, 3), notamment selon l'une des revendications 1 à 13, **caractérisée en ce que** la feuille de brasure (6, 7, 16, 26, 36) est perméable au gaz.

15. Feuille de brasure selon la revendication 14, **caractérisée en ce que** la feuille de brasure (6, 7, 16, 26, 36) est poreuse.

16. Feuille de brasure selon la revendication 14 ou 15, **caractérisée en ce que** la feuille de brasure (6, 7, 16, 26, 36) est une feuille de mousse de brasure.

17. Feuille de brasure selon la revendication 14, 15 ou 16, **caractérisée en ce que** la feuille de brasure (6, 7, 16, 26, 36) comporte au moins un agent fluxant.

18. Feuille de brasure selon l'une des revendications 14 à 17, **caractérisée en ce que** la feuille de brasure (6, 7, 16, 26, 36) est un matériau à base de nickel.

19. Feuille de brasure selon l'une des revendications 14 à 18, **caractérisée en ce que** la feuille de brasure (6, 7, 16, 26, 36) comporte du bore et/ou du silicium.
